# EUROPEAN PATENT SPECIFICATION

(11) **EP 2 098 654 B1**
(45) Date of publication and mention of the grant of the patent: **14.12.2016**
(21) Application number: 08018643.0
(22) Date of filing: 24.10.2008
(51) Int. Cl.: E04C 2/288, E04C 2/52, E04D 13/16, F28D 20/02

(54) **Heating or cooling ceiling with corrugated steel sheet**
Klimadecke mit gewelltem Stahlblech
Plafond chauffant ou réfrigérant avec tôle ondulée

(30) Priority: 04.03.2008 EP 08102237
(43) Date of publication of application: 09.09.2009
(73) Proprietor: Tata Steel Nederland Technology B.V., 1951 JZ Velsen-Noord (NL)
(72) Inventor: Hoekstra Bonnema, Bauke Jelle, 1484 EP Graft (NL); Wigchert, Albertus Johannes Maria, 2071 BG Santpoort-Noord (NL); Pennarts, Johannes Rudolf Petrus, 1078 PD Amsterdam (NL); Bloem, Melanie Rosa, 2274 GA Voorburg (NL); Benthem, Jan, 1059 BT Amsterdam (NL); Vos, Joost Heinrich, 1059 BT Amsterdam (NL); Stegeman, Ronno, 1059 BT Amsterdam (NL); Van der Meulen, Roderik Arno, 1059 BT Amsterdam (NL)
(74) Representative: Blauw, Frans Gerard

(56) References cited:
- WO-A-2007/039221
- DE-U1- 20 208 898
- FR-A- 2 635 603
- GB-A- 857 249

## Description

The invention relates to a ceiling for a building, wherein the ceiling comprises a corrugated steel sheet having horizontal portions alternating with portions that are upwards open, wherein the steel sheet has been covered by an isolating layer and wherein the steel sheet has at least partially been provided with openings for reducing the reverberation of noise in the building.

Such a ceiling is known from FR2635603. These ceilings are provided to reduce the noise in the building by damping the reflection of noise against the ceiling. Due to the openings in the steel sheet, part of the noise is damped by the isolating layer. This type of ceiling is made to be self-supporting due to the corrugation of the steel sheet. The upwards open portions can for instance be substantially V-shaped or U-shaped. This type of ceilings is mostly used for commercial buildings, such as offices or buildings in which mechanical labour forms an essential part of the work performed, such as industrial halls. The ceiling can form the roof of the building, in which case the isolating layer is covered by a waterproof covering, or the ceiling can form the ceiling of a room under another room, in which case the ceiling is provided under the floor of that other room.

However, nowadays the energy requirements of buildings require that overall energy consumption both for cooling and for heating is minimized. Nowadays, modem building are well isolated, resulting in the situation that during daytime often too much heat energy is present in the building. Cooling thus is often more necessary than heating. Thus, as much heat in the building as possible should be used and should not be discharged into the environment. For instance, during daytime the air in the building can become too hot due to the entrance of sun energy, while at night and in the morning the air in the building is too cold.

The ceiling of a building plays an important role in this respect, while at the same time the ceiling has to be built at a price that is as cost-effective as possible. Several techniques have already been used or proposed, but none of these provides a ceiling that fulfils the present standards for environment protection and energy reduction in a satisfactory working environment.

It is an object of the invention to provide a ceiling for a building that contributes to a satisfactory working environment, while at the same time it is another object of the invention to provide a ceiling of a building that is as energy efficient as possible while being cost-effective at the same time.

According to the invention, these objects can be reached with a ceiling for a building, wherein the upwards open portions of the steel sheet have been at least partially filled with means for storing and releasing energy, wherein the means for storing and releasing energy comprise concrete in which particles containing phase change material are present and wherein the means for storing and releasing energy comprise a tube in at least some of the upwards open portions, for cooling or heating the means for storing or releasing energy with water passing through the tube.

The use of phase change material in combination with cooling or heating means in a ceiling as such is disclosed in DE20208898U1.

With the ceiling according to the invention a heat/cold buffer is provided in the upwards open portions of the corrugated steel sheet due to the presence of the means for storing and releasing energy, which results in a more constant temperature in the building, with the consequence that less energy is needed to heat or cool the building. The concrete in the means for storing and releasing energy is a simple and cost-effective material for storing and releasing heat energy, that can easily be provided in the upwards open portions of the steel sheet. At the same time part of the steel sheet is provided with openings, which measure reduces the reverberation of the ceiling significantly, since at the spots where the openings are present noise or sounds are muffled by the isolating layer on top of the steel sheet. Moreover, this isolating layer can also provide a thermal isolation for the ceiling.

The phase change material in the means for storing and releasing energy can take up a lot of energy at a predetermined, small temperature interval when the temperature of the surrounding construction rises, and release this energy again when the temperature goes down.

It is possible to use only phase change material to fill the upwards open portions, but phase change material is a rather expensive product. Thus, it is preferred to mix an amount of phase change material in the form of particles with concrete and use this mixture to (partially) fill the upwards open portions of the steel sheet. It has been found that using in volume 5% of particles with phase change material already improved the heat storage capacity with 150% as compared with concrete without phase change material. This is a very effective use of the expensive phase change material because the phase change material is always present near the surface where heat is exchanged, due to the use of the corrugated steel sheet in which the upwards open portions have a relatively small cross section.

The means for storing and releasing energy comprise a tube in at least some of the upwards open portions, for cooling or heating the means for storing or releasing energy with water passing through the tube. The use of such tubes can be compared with the use of tubes in a concrete floor for underfloor heating, but since the mass of the means for storing and releasing energy is much smaller in each upwards open portion, the response to the mass is much faster than in a floor using underfloor heating.

Preferably the tubes in the upwards open portions are connected to each other and/or to a device for cooling or heating the water passing through the tubes. When the tubes are connected to each other, water that passes through tubes and takes up heat/cold in one part of the building can be transported through tubes in another part of the building where the temperature is too low/high and heat/cool that part of the building. For instance, the hot part of the building can be the south part of the building where the sun heats the building, and the cold part can be the north part of the building. In this situation the water circulates through the tubes in the ceiling, which are connected to each other. When the building is warm enough, the heated water from the tubes can be transported through a device for cooling the water by connecting the tubes to this device, for instance a cooler at the north side of the building. This device can preferably also heat the water when the rooms inside the building are too cold, or the tubes can be connected to a collector or heat pump, so as to heat the building by radiation from the ceiling through which the tubes run.

Due to the measures that the upwards open portions of the corrugated steel plate are at least partly filled with means for storing and releasing energy according to any of the embodiments, and that preferably tubes with water are provided for that are in contact with the means for storing and releasing energy, the temperature in the building gets far less hot or cold then in the situation that these measures according to the invention are not present. This means that less energy is needed to cool or heat the building, and that the devices to do so can have a smaller capacity, making such devices less expensive.

According to a preferred embodiment the steel sheet has a lower surface that is treated in such a way that the thermal conductivity from air to steel is optimal at a temperature between 10 and 30° C, preferably between 15 and 25° C, and the thermal radiation from the steel sheet is optimal between 10 and 30° C, preferably between 15 and 25° C. Thus when the temperature in the building is high the heat energy of the air is conducted into the steel plate, where the means for storing and releasing energy will take up the heat energy, while when the building is cold the steel sheet will radiate the heat energy into the building.

Preferably the isolating layer is a layer of mineral wool. Mineral wool is very suitable for isolating both thermally and reverberatingly, and it is also lightweight and easy to apply.

The corrugated steel sheet used in the ceiling as described above is provided with horizontal portions alternating with portions that are upwards open, wherein the horizontal portions have been provided with openings, and wherein preferably also the upper parts of the sides of the portions that are upwards open have been provided with openings, and in that the lower parts of the portions that are upwards open are closed.

Preferably the portions of the corrugated steel sheet that are upwards open have inclined sides. With such a form, the ceiling is better suited to radiate heat into the building.

Preferably the portions of the corrugated steel sheet that are upwards open are V-shaped with a flat bottom. This shape makes it possible to fill the upwards open portions effectively and/or with a sufficient amount of means for storing and releasing energy, while at the same time the shape is such that a minimum of steel is needed to form the corrugated steel sheet.

Preferably the portions of the steel sheet that are upwards open have a height between 75 and 250 mm, more preferable between 100 and 200 mm, and have an upwards opening width between 50 and 225 mm, more preferable between 75 and 200 mm, wherein the horizontal portions have an opening width between 75 and 200 mm, more preferable between 100 and 175 mm. Such a steel sheet is strong and rigid enough to be self-supporting, and provides enough space in the upwards open portions for the means for storing and releasing energy.

The invention will be elucidated referring to exemplifying embodiments of a ceiling in the accompanying figure.

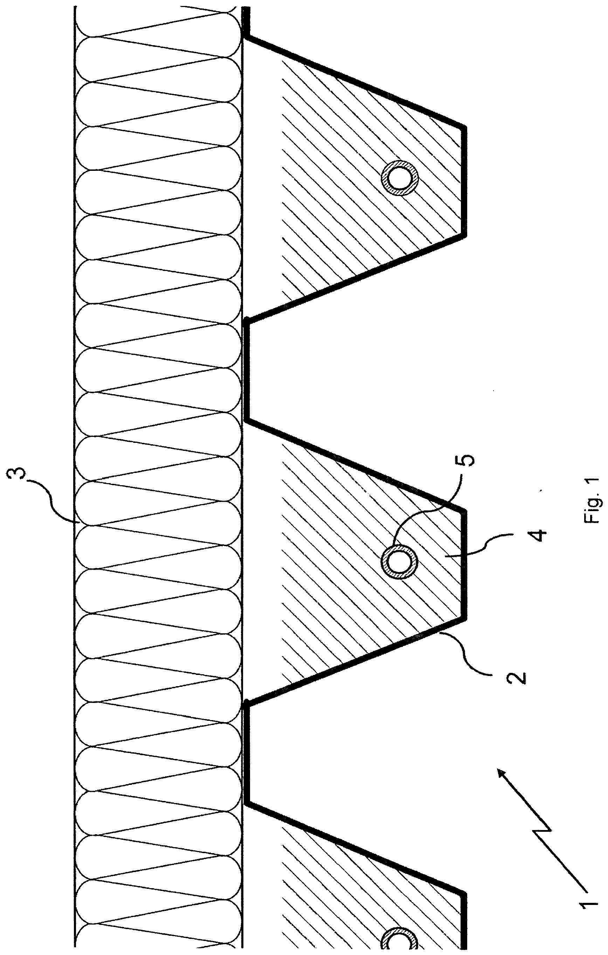

Figure 1 schematically shows an embodiment of a ceiling of a building in cross section.

Figure 1 shows a ceiling 1 of a building made of a corrugated steel sheet 2 on which an isolating layer 3 is present. The corrugated steel sheet is formed of alternating horizontal portions and upwards open portions. The upwards open portions are partly filled with means for storing and releasing energy 4, for example concrete or concrete mixed with particle of phase change material. In this embodiment in each upwards open portion of the corrugated steel sheet filled with concrete mixed with phase change material, a tube 5 is placed approximately in the plane of symmetry of the upwards open portions, preferably in the lower half of the upwards open portion. In the horizontal portions of the corrugated steel sheet and preferably also in the upper part of the inclined sides of the upwards open portions of the corrugated steel sheet openings (not shown) are present.

The concrete mixed with phase change material can take up a lot of heat energy when the temperature in the building rises to a temperature above the temperature at which the phase change material changes from solid to liquid. The temperature range at which this happens can be chosen, and is for instance between 21 and 22° C. When the temperature in the building rises above 22° C, a lot of energy is taken up by the phase change material. When at a later phase the temperature in the building goes down again under 21° C, the phase change material will change its phase from liquid to solid again, and the energy that is released is used to heat the building by radiation from the corrugated sheet.

The tubes in the concrete mixed with phase change material can be used in several ways. When for instance the building has a south side and a north side, the south side will become hot very fast when the sun shines, whereas the north side can remain too cold. If the tubes are connected in such a way that water flowing through the tubes in the south side, which has been heated by the sun, thereafter flows through tubes in the north side of the building, the heated water will here heat the concrete with phase change material and thus the north side of the building by radiation.

However, when the building in total becomes too hot after the phase change material has taken up a lot of energy, the connection of the tubes is changed and the water is transported to a cooling device outside the building, for instance a cooler at the north side of the building. This cooling device can be of any type. Preferably this device can also be used as heater to heat the building when the building is too cold, by heating the water and circulating the heated water through the tubes in the ceiling. The water can also be heated by a separate device, for instance a heat pump.

The tubes are preferably made from a plastic material.

The isolating layer can be formed by any isolating material, but in a preferred embodiment it is a mineral wool. This is especially advantageous since the isolating layer must not only be thermally isolating, but has to function as a sound isolating material as well. The horizontal portions and the upper part of the inclined sides of the upwards open portions of the corrugated steel sheet are provided with openings or perforations, such that a considerable reduction of the noise in the building is achieved, due to the dampening of the sound that enters through such openings and is muffled by the isolating layer, instead of being reflected by the steel surface.

According to a preferred embodiment the steel sheet has been coated with a coating on its lower side. Such a coating should not only prevent oxidation, but also provide the steel sheet with a surface that gives the surface an optimal conductivity and radiation at room temperature, preferably between 15 and 25° C.

As shown in Figure 1, the upwards open portions of the steel sheet have two inclined surfaces, connected by a horizontal side at the lower end thereof. The sides are preferably inclined so as to give a better downwards radiation. Moreover, in this way the corrugated steel sheet has a good stiffness and strength, so the steel sheet can be relatively thin to provide a self-supporting ceiling. The upwards open portions preferably have a height of approximately 160 mm with a width of the horizontal side of approximately 40 mm and an opening width of approximately 130 mm. The horizontal portions of the corrugated steel sheet are approximately 120 mm wide.

It will be understood that many variations are possible from the embodiment as shown in Figure 1 and described above. For instance, instead of concrete another material could be used, or another isolating layer could be used. Of course the corrugated steel sheet could have other dimensions.

## Claims

1. Ceiling for a building, wherein the ceiling (1) comprises a corrugated steel sheet (2) having horizontal portions alternating with portions that are upwards open, wherein the steel sheet is covered by an isolating layer (3) and wherein the steel sheet (2) is at least partially provided with openings for reducing the reverberation of noise in the building, **characterised in that** the upwards open portions of the steel sheet (2) is at least partially filled with means for
storing and releasing heat energy (4), wherein the means for storing and releasing energy (4) comprise concrete in which particles containing phase change material are present and wherein the means for storing and releasing energy (4) comprise a tube (5) in at least some of the upwards open portions, for cooling or heating the means for storing or releasing energy (4) by means of water passing through the tube (5).

2. Ceiling according to any one of the preceding claims, wherein the steel sheet (2) has a lower surface that is treated in such a way that the thermal conductivity from air to steel is optimal at a temperature between 10 and 30° C, preferably between 15 and 25° C, and the thermal radiation from the steel sheet is optimal between 10 and 30° C, preferably between 15 and 25° C.

3. Ceiling according to any one of the preceding claims, wherein the isolating layer (3) is a layer of mineral wool.

4. Ceiling according to any one of the preceding claims, wherein the horizontal portions of the corrugated steel sheet (2) is provided with openings, and
wherein preferably also the upper parts of the sides (7,8) of the portions that are upwards open are provided with openings, and wherein the lower parts of the portions that are upwards open are closed.

5. Ceiling according to any of the preceding claims, wherein the portions of the corrugated steel sheet (2) that are upwards open have inclined sides (7,8).

6. Ceiling according to any of the preceding claims, wherein the portions (7,8,9) of the corrugated steel sheet (2) that are upwards open are V-shaped with a flat bottom.

7. Ceiling according to any of the preceding claims, wherein the portions (7,8,9) of the corrugated steel sheet (2) that are upwards open have a height between 75 and 250 mm, preferably between 100 and 200 mm, and have an upwards opening width between 50 and 225 mm, preferably between 75 and 200 mm, wherein the horizontal portions have an opening width between 75 and 200 mm, preferably between 100 and 175 mm.

## Patentansprüche

1. Decke für ein Gebäude, wobei die Decke (1) ein gewelltes Stahlblech (2) mit horizontalen Abschnitten, die mit Abschnitten, die nach oben offen sind, alternieren, aufweist, wobei das Stahlblech durch eine isolierende Schicht (3) abgedeckt ist und wobei das Stahlblech (2) mindestens teilweise mit Öffnungen zur Minderung des Geräuschnachhalls im Gebäude versehen ist, **dadurch gekennzeichnet, dass** die nach oben offenen Abschnitte des Stahlblechs (2) mindestens teilweise mit Mitteln zur Speicherung und Abgabe von Wärmeenergie (4) gefüllt sind, wobei die Mittel zur Speicherung und Abgabe von Energie (4) Beton aufweisen, in welchem Phasenänderungsmaterial enthaltende Partikeln vorhanden sind, und wobei die Mittel zur Speicherung und Abgabe von Energie (4) ein Rohr (5) in mindestens einigen der nach oben offenen Abschnitten aufweisen, um die Mittel zur Speicherung und Abgabe von Energie (4) mittels durch das Rohr (5) durchlaufendes Wasser zu kühlen oder zu erwärmen.

2. Decke nach einem der vorhergehenden Ansprüche, wobei das Stahlblech (2) eine untere Oberfläche hat, die so behandelt ist, dass die Wärmeleitfähigkeit von der Luft zum Stahl bei einer Temperatur zwischen 10 und 30° C, vorzugsweise zwischen 15 und 25° C, optimal ist und die Wärmestrahlung vom Stahlblech zwischen 10 und 30° C, vorzugsweise zwischen 15 und 25° C, optimal ist.

3. Decke nach einem der vorhergehenden Ansprüche, wobei es sich bei der isolierenden Schicht (3) um eine Schicht aus Mineralwolle handelt.

4. Decke nach einem der vorhergehenden Ansprüche, wobei die horizontalen Abschnitte des gewellten Stahlblechs (2) mit Öffnungen versehen sind und wobei vorzugsweise auch die oberen Teile der Seiten (7,8) der Abschnitte, die nach oben offen sind, mit Öffnungen versehen sind und wobei die unteren Teile der Abschnitte, die nach oberen offen sind, geschlossen sind.

5. Decke nach einem der vorhergehenden Ansprüche, wobei die Abschnitte des gewellten Stahlblechs (2), die nach oben offen sind, geneigte Seiten (7,8) haben.

6. Decke nach einem der vorhergehenden Ansprüche, wobei die Abschnitte (7, 8, 9) des gewellten Stahlblechs (2), die nach oben offen sind, V-förmig mit einem flachen Boden sind.

7. Decke nach einem der vorhergehenden Ansprüche, wobei die Abschnitte (7, 8, 9) des gewellten Stahlblechs (2), die nach oben offen sind, eine Höhe zwischen 75 und 250 mm, vorzugsweise zwischen 100 und 200 mm, und eine Öffnungsbreite nach oben zwischen 50 und 225 mm, vorzugsweise zwischen 75 und 200 mm, haben, wobei die horizontalen Abschnitte eine Öffnungsbreite zwischen 75 und 200 mm, vorzugsweise zwischen 100 und 175 mm, haben.

## Revendications

1. Plafond pour un bâtiment, le plafond (1) comprenant une tôle ondulée en acier (2) comprenant des parties horizontales s'alternant avec des parties ouvertes vers le haut, la tôle d'acier étant recouverte d'une couche isolante (3) et la tôle d'acier (2) étant au moins partiellement recouverte d'ouvertures pour la réduction de la réverbération du bruit dans le bâtiment, **caractérisé en ce que** les parties ouvertes vers le haut de la tôle d'acier (2) sont au moins partiellement remplies d'un dispositif pour l'accumulation et le dégagement de la chaleur (4), le dispositif pour l'accumulation et le dégagement de la chaleur (4) comprenant du béton dans lequel des particules contenant un matériau à changement de phase sont présentes, et le dispositif pour l'accumulation et le dégagement de la chaleur (4) comprenant un tube (5) dans au moins certaines des parties ouvertes vers le haut pour le refroidissement ou le réchauffement du dispositif pour l'accumulation et le dégagement de la chaleur (4) en faisant passer de l'eau dans le tube (5).

2. Plafond selon une quelconque des revendications précédentes, la tôle d'acier (2) présentant une surface inférieure traitée de sorte que la conductivité thermique de l'air à l'acier soit optimale à une température comprise entre 10 et 30°C, et de préférence entre 15 et 25°C, et le rayonnement thermique dégagé par la tôle d'acier est optimal à une température comprise entre 10 et 30°C, de préférence entre 15 et 25°C.

3. Plafond selon une quelconque des revendications précédentes, la couche isolante (3) étant une couche de laine minérale.

4. Plafond selon une quelconque des revendications précédentes, les parties horizontales de la tôle ondulée en acier (2) étant dotées d'ouvertures, et, également de préférence, les parties supérieures des côtés (7,8) des parties ouvertes vers le haut étant dotées d'ouvertures et les parties inférieures des parties ouvertes vers le haut étant fermées.

5. Plafond selon une quelconque des revendications précédentes, les parties de tôle ondulée en acier (2) ouvertes vers le haut présentent des côtés inclinés (7,8).

6. Plafond selon une quelconque des revendications précédentes, les parties (7,8,9) de la tôle ondulée en acier (2) ouvertes vers le haut étant en forme de V avec un fond plat.

7. Plafond selon une quelconque des revendications précédentes, les parties (7,8,9) de la tôle ondulée en acier (2) ouvertes vers le haut mesurant de 75 mm à 250 mm de hauteur, de préférence de 100 à 200 mm, et possédant une ouverture vers le haut mesurant de 50 à 225 mm de large, de préférence de 75 à 200 mm, les parties horizontales présentant une ouverture mesurant de 75 à 200 mm de large, de préférence de 100 à 175 mm.
